# EUROPÄISCHE PATENTSCHRIFT

(11) **EP 1 557 100 B1**
(45) Veröffentlichungstag und Bekanntmachung des Hinweises auf die Patenterteilung: **08.10.2008**
(21) Anmeldenummer: 04030560.9
(22) Anmeldetag: 23.12.2004
(51) Int. Cl.: A24C 5/34, G01N 21/59

(54) **Filterstrangprüfung**
Filter rod inspection
Inspection d'une tige de filtre

(30) Priorität: 22.01.2004 DE 102004003447
(43) Veröffentlichungstag der Anmeldung: 27.07.2005
(73) Patentinhaber: Hauni Maschinenbau AG, 21033 Hamburg (DE)
(72) Erfinder: Schröder, Dierk, 22399 Hamburg (DE); Lämmel, Max, 21493 Schwarzenbek (DE); Hapke, Siegfried, 21502 Geesthacht (DE)
(74) Vertreter: Grebner, Christian Georg Rudolf

(56) Entgegenhaltungen:
- EP-A- 0 848 246
- US-A- 3 334 240
- US-A- 4 011 950
- US-A- 4 986 285
- US-A1- 2002 030 820

## Beschreibung

Die Erfindung betrifft eine Messeinrichtung zum Prüfen eines längsaxial geförderten stabförmigen Artikels der Tabak verarbeitenden Industrie, insbesondere Filterstrang, vorzugsweise Multisegmentfilterstrang, umfassend eine Lichtquelle zur Durchleuchtung des Artikels und einen im Durchlichtverfahren angeordneten Sensor zur teilweisen Erfassung der im Artikel durch die Lichtquelle hervorgerufenen Helligkeit sowie eine Einrichtung zum Prüfen eines längsaxial geförderten stabförmigen Artikels der Tabak verarbeitenden Industrie. Ferner betrifft die Erfindung ein Verfahren zum Prüfen eines längsaxial geförderten stabförmigen Artikels der Tabak verarbeitenden Industrie, insbesondere Filterstrang, vorzugsweise Multisegmentfilterstrang, wobei der Artikel mittels einer Lichtquelle durchleuchtet wird und die durch die Lichtquelle hervorgerufene Helligkeit im durchleuchteten Artikel mittels eines im Durchlichtverfahren angeordneten Sensors teilweise erfasst wird. Des Weiteren betrifft die Erfindung eine Maschine der Tabak verarbeitenden Industrie, insbesondere Multisegmentfilterherstellungsmaschine.

Aus der Offenlegungsschrift DE-A-27 32 520 ist ein Verfahren zur Überprüfung eines kontinuierlich vorwärts bewegten Stranges, insbesondere Zigarettenfilterstranges, in welchem Abschnitte unterschiedlicher Materialbeschaffenheit und/oder Ausbildung kontinuierlich aufeinander folgen, beschrieben. Hierbei wird mindestens ein in einer mindestens annähernd senkrecht zur Filterstranglängsachse sich erstreckenden Ebene verlaufender Lichtstrahl in den Filterstrang eingeleitet und der Helligkeitswert an einer mindestens annähernd in der gleichen, den Lichtstrahl enthaltenden Ebene sich befindenden, von der Lichteinleitstelle entfernten Stelle der Filterstrangaußenseite mittels eines fotoelektronischen Bauelements gemessen, wobei das Messergebnis in einer mit dem fotoelektronischen Bauelement elektrisch verbundenen Auswertschaltung ausgewertet wird.

Darüber hinaus ist in der Patentschrift US-4,001,579, die der Patentschrift DE-C-25 10 502 entspricht, eine Vorrichtung zur Kontrolle zusammengesetzter Zigarettenfilter während der Fabrikation nach fortlaufenden Ansätzen der Filterelemente in eine rohrförmige Hülle offenbart.

Bei der Herstellung von Zigarettenfiltern bzw. Multisegmentfiltern, die in Längsrichtung mindestens zwei Abschnitte unterschiedlicher Materialbeschaffenheit aufweisen, besteht die Schwierigkeit, dass die von einem kontinuierlich hergestellten Zigarettenfilterstrang abgeschnittenen Filterstäbe nicht nur von konstanter Länge sein sollen, sondern dass die Schnitte stets auch an der gleichen Stelle eines ganz bestimmten Filterabschnittes durchgeführt werden sollten, um identische Filterstäbe der gleichen vorbestimmten Zusammensetzung zu erhalten.

In der Zigarettenindustrie besteht zunehmend die Tendenz, Multifilter zu verwenden, die auf so genannten Multisegmentfilterherstellungsmaschinen im Strangverfahren hergestellt werden. Bei diesem Verfahren muss der aus unterschiedlichen Filtersegmenten gebildete endlose Filterstrang an den richtigen bzw. entsprechenden Stellen in Stücke geschnitten werden, so dass die geschnittenen Filterstücke auf einer Filteransetzmaschine an die Zigaretten angesetzt werden. Hierbei ist die Genauigkeit der Schnittlage ein entscheidendes Qualitätskriterium. Für die Lage des durchgeführten Schnittes wird auf einer Multisegmentfilterherstellungsmaschine ein Regelkreis verwendet, dessen Ist-Wert durch einen optischen Sensor bestimmt wird. Die Genauigkeit der Schnittlageregelung hängt somit im entscheidenden Maße von der Genauigkeit der Filtersegmentmessung ab.

Die Anforderungen an die Genauigkeit der Segmentmessung bei Multisegmentfiltersträngen nehmen zu, da einerseits höhere Anforderungen an die Genauigkeit der Lagemessung der Filtersegmente gestellt werden und andererseits die Filterübergänge mit geringem Kontrast erkannt werden sollen. Hierzu sind die bisher bekannten Messverfahren nicht geeignet.

Außerdem ist in US-A-4 986 285 eine Vorrichtung zum Prüfen der Dichte eines umhüllten Tabakstrangs beschrieben. Hierzu sind um eine Strangführung herum Strahlungsquellen sternförmig angeordnet, wobei den Strahlungsquellen optoelektronische Wandler zugeordnet sind. Zur Dichtemessung wird das im Inneren des Tabakstocks reflektierte bzw. gestreute Licht und seitwärts quer zur Anstrahlungsrichtung aus dem Strang austretende Licht erfasst.

Damit wird ausgenutzt, dass sich größere Messsignale ergeben, wenn das im Inneren des Strangs reflektierte bzw. gestreute und seitwärts der Einstrahlrichtung das austretende Licht als Maß für die Strangdichte erfasst wird. Gemäß einer Ausführungsform (Fig. 6) stimmt die Zahl der Strahlungsempfänger und der Strahlungsquellen nicht überein. Hierbei sind die Strahlungsquellen nicht direkt auf die Strahlungsempfänger ausgerichtet, wobei die Strahlungsempfänger im Strang reflektiertes Licht als Maß für die Strangdichte messen.

Ausgehend von diesem Stand der Technik ist es Aufgabe der vorliegenden Erfindung, die Genauigkeit der Erkennung von Segmenten in einem Multisegmentfilterstrang zu verbessern, so dass eine Steuerung einer Schneideinrichtung ermöglicht wird.

Die Aufgabe wird bei einer Messeinrichtung zum Prüfen eines längsaxial geförderten stabförmigen Artikels der Tabak verarbeitenden Industrie, insbesondere Filterstrang, vorzugsweise Multisegmentfilterstrang, umfassend eine Lichtquelle zur Durchleuchtung des Artikels und einen im Durchlichtverfahren angeordneten Sensor zur teilweisen Erfassung der im Artikel durch die Lichtquelle hervorgerufenen Helligkeit, dadurch gelöst, dass die Lichtquelle als Laserlichtquelle ausgebildet ist, mittels derer ein Lichtstrahl senkrecht zur Förderrichtung des Artikels fächerartig oder punktförmig auf einer Eintrittsseite in den Artikel eingeleitet wird, dass auf einer Austrittsseite wenigstens eine optische Linse vorgesehen ist, die derart ausgebildet ist, dass ein kleinerer Bereich eines durch die Laserlichtquelle im Artikel erzeugten Helligkeitsbereichs auf der Austrittsseite des Artikels erfasst wird, und dass im Strahlengang zwischen der optischen Linse und dem Sensor eine Blende vorgesehen ist.

Durch die erfindungsgemäße Maßnahme wird der Öffnungswinkel der Empfangsoptik minimiert, so dass auf der Empfängerseite mit einer abbildenden Optik bzw. Einrichtung gearbeitet wird. Somit wird beispielsweise auf einer fotoempfindlichen Schicht eines Fotosensors ein kleinerer Bereich eines durch die Lichtquelle erzeugten Helligkeitsbereichs des Artikels erfasst.

Dabei weist die Abbildungseinrichtung wenigstens eine Linse auf, so dass eine optische Einrichtung ausgebildet wird.

Ferner ist die Messeinrichtung mittels einer Lichtquelle, einer Abbildungseinrichtung und einem Sensor ausgebildet.

Überdies wird die Aufgabe durch eine Einrichtung zum Prüfen eines längsaxial geförderten stabförmigen Artikels der Tabak verarbeitenden Industrie, insbesondere Filterstrang, vorzugsweise Multisegmentfilterstrang, gelöst, die mit einer Messeinrichtung ausgebildet ist.

In einer bevorzugten Weiterbildung sind wenigstens zwei Messeinrichtungen für den Artikel vorgesehen.

Insbesondere sind mehrere Messeinrichtungen quer zur Längsachse des Artikels, vorzugsweise in einer Ebene, angeordnet.

Außerdem wird ein durch die Lichtquelle hervorgerufener Ausbreitungskegel minimiert, wenn die Lichtquelle als Laserlichtquelle ausgebildet ist, so dass der zu untersuchende Multisegmentfilterstrang bzw. stabförmige Artikel fächerartig oder punktförmig mit Licht beaufschlagt wird, wodurch die Messqualität durch einen reduzierten Ausbreitungskegel des Lichtes im Artikel verbessert wird.

Ferner ist insbesondere im Strahlengang zwischen der Abbildungseinrichtung und dem Sensor wenigstens eine Blende vorgesehen.

Eine weitere Lösung der Aufgabe erfolgt durch eine Maschine der Tabak verarbeitenden Industrie, insbesondere Multisegmentfilterherstellungsmaschine, die mit einer erfindungsgemäßen Einrichtung zum Prüfen eines stabförmigen Artikels der Tabak verarbeitenden Industrie oder mit einer Messeinrichtung ausgestattet ist. Zur Vermeidung von Wiederholungen wird auf die voranstehenden Ausführungen zur Einrichtung ausdrücklich verwiesen.

Ferner wird die Aufgabe durch ein Verfahren zum Prüfen eines längsaxial geförderten stabförmigen Artikels der Tabak verarbeitenden Industrie, insbesondere Filterstrang, vorzugsweise Multisegmentfilterstrang, wobei der Artikel mittels einer Lichtquelle durchleuchtet wird und die durch die Lichtquelle hervorgerufene Helligkeit im durchleuchteten Artikel mittels eines im Durchlichtverfahren angeordneten Sensors teilweise erfasst wird, gelöst, das dadurch weitergebildet wird, dass die Lichtquelle als Laserlichtquelle ausgebildet ist, mittels derer ein Lichtstrahl senkrecht zur Förderrichtung des Artikels fächerartig oder punktförmig auf einer Eintrittsseite in den Artikel eingeleitet wird, dass auf einer Austrittsseite wenigstens eine optische Linse vorgesehen ist, die derart ausgebildet ist, dass ein kleinerer Bereich eines durch die Laserlichtquelle im Artikel erzeugten Helligkeitsbereichs auf der Austrittsseite des Artikels erfasst wird, und dass im Strahlengang zwischen der optischen Linse und dem Sensor eine Blende vorgesehen ist.

Hierbei wird der Artikel mittels einer Laserlichtquelle durchleuchtet.

Gemäß einer bevorzugten Ausführungsform ist es günstig, wenn der Artikel mittels wenigstens zweier Lichtquellen durchleuchtet wird.

Im Folgenden wird die Erfindung anhand der in den Zeichnungen dargestellten Ausführungsbeispielen ohne Beschränkung des allgemeinen Erfindungsgedankens erläutert, auf die im Übrigen bezüglich aller im Text nicht näher beschriebenen, erfindungsgemäßen Einzelheiten ausdrücklich verwiesen wird. Es zeigen:
- Fig. 1: einen Längsschnitt durch eine Ausführungsform einer Prüfeinrichtung gemäß dem Stand der Technik;
- Fig. 2: einen Längsschnitt durch eine Ausführungsform einer erfindungsgemäßen Einrichtung und
- Fig. 3: einen Querschnitt durch eine zweite Ausführungsform einer erfindungsgemäßen Prüfeinrichtung.

In den folgenden Zeichnungen sind gleiche bzw. gleichartige Elemente oder Teile mit denselben Bezugsziffern versehen, so dass von einer erneuten Vorstellung jeweils abgesehen wird.

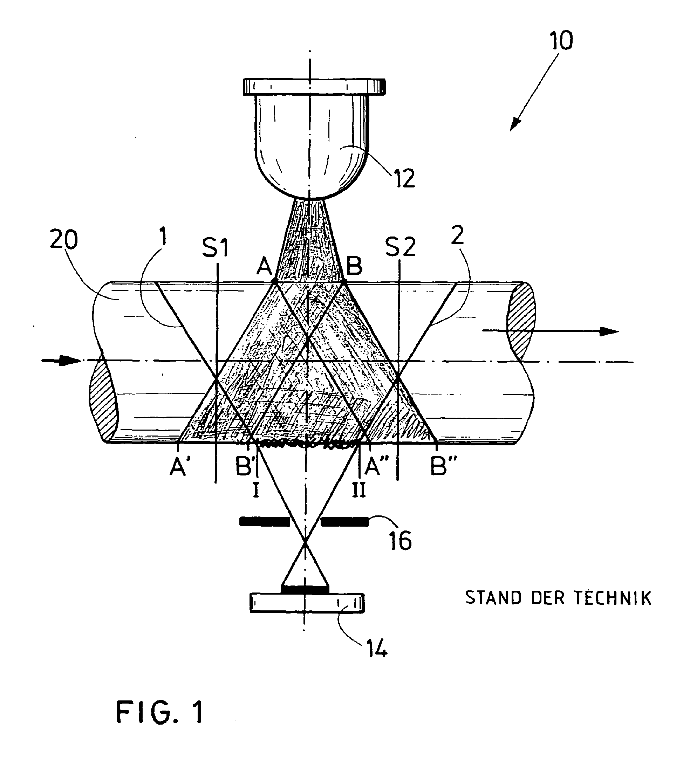

Fig. 1 zeigt einen Längsschnitt durch eine Prüfeinrichtung 10, bestehend aus einer Lichtquelle 12, z.B. Leuchtdiode, und einem der Lichtquelle 12 gegenüber angeordneten Sensor 14. Zwischen der Lichtquelle 12 und dem Sensor 14 wird ein Filterstrang 20, vorzugsweise bestehend aus mehreren Filtersegmenten, hindurchgefördert. Der Filterstrang 20 wird im Durchlichtverfahren auf der Sendeseite von der Lichtquelle 12 beleuchtet. Dabei entsteht durch den aus der Lichtquelle 12 austretenden Lichtkegel eine in Strangrichtung bzw. Förderrichtung des Filterstrangs 20 ausgedehnte beleuchtete Zone A-B, in der das Licht in den Filterstrang 20 eindringt. Durch Streuung im Filtermaterial des Filterstrangs 20 breitet sich das Licht im Filterstrang 20 bzw. Material quasi kegelförmig aus, so dass von Punkt A Licht zwischen den Punkten A' und A" an der gegenüberliegenden Seite des Filterstrangs 20 austritt. Entsprechend wird das Licht vom Punkt B kegelförmig zwischen den Punkten B' und B" an der gegenüberliegenden Seite des Filterstrangs 20 verteilt. Insgesamt findet die Lichtverteilung an der austretenden Seite des Filterstrangs im Bereich von Punkt A' bis zum Punkt B" statt.

Auf der Empfängerseite ist vor dem Sensor 14, z.B. einer Fotodiode, eine Blende 16 vorgesehen. Aufgrund der geometrischen Verhältnisse ergibt sich, dass in einem bestimmten Winkel Licht von der austretenden Seite des Filterstrangs 20 durch die Blende 16 auf eine fotoempfindliche Schicht des Sensors 14 gelangt. Übertragen auf die Oberfläche des Filterstrangs 20 bedeutet dies, dass Licht aus der schraffierten Zone I-II auf die fotoempfindliche Schicht des Sensors 14 gelangt.

Wird davon ausgegangen, dass der Ausbreitungskegel des Lichts im Filterstrang 20 auch auf der Empfängerseite wirksam ist, wird Licht innerhalb der eingezeichneten Linien 1 und 2 eingefangen. Die Schnittpunkte zwischen den beiden Gruppen der Ausbreitungskegel markieren die beiden senkrechten Ebenen S1 und S2 in Strangrichtung, innerhalb derer sich Intensitätsschwankungen bemerkbar machen.

Wird in den Strahlengang des Lichtkegels der Lichtquelle 12 ein Filterstrang 20 mit Filtersegmenten, bei denen ein Hell-Dunkel-Übergang in die Messzone eingebracht wird, wirkt sich dieser Hell-Dunkel-Übergang intensitätsmäßig aus, wenn er die Ebene S1 erreicht. Der Intensitätsübergang ist spätestens abgeschlossen, wenn er die parallele Ebene S2 durchläuft.

Bei der in Fig. 1 dargestellten Messanordnung gemäß dem Stand der Technik wird die Ausdehnung bzw.. der Abstand der Ebenen S1, S2 durch den Ausbreitungskegel des eingespeisten Lichtstrahls in den Filterstrang 20 bzw. das Material, den Ausbreitungskegel der Lichtquelle sowie den Öffnungswinkel der Empfangsoptik bestimmt. Der Ausbreitungskegel des Lichts im Filterstrang 20 bzw. dem Material ist bedingt durch die Eigenschaften des Materials und kann daher von außen nicht beeinflusst werden.

Der Ausbreitungskegel der Lichtquelle 12, der auf der Oberfläche des Filterstrangs 20 zur Beleuchtung der Strecke A-B führt, ist abhängig von der Größe des Kegelwinkels. Der Öffnungswinkel der Empfangselektronik ist festgelegt durch die Dimension der Blende 16 und die Größe der fotoempfindlichen Schicht des Sensors 14.

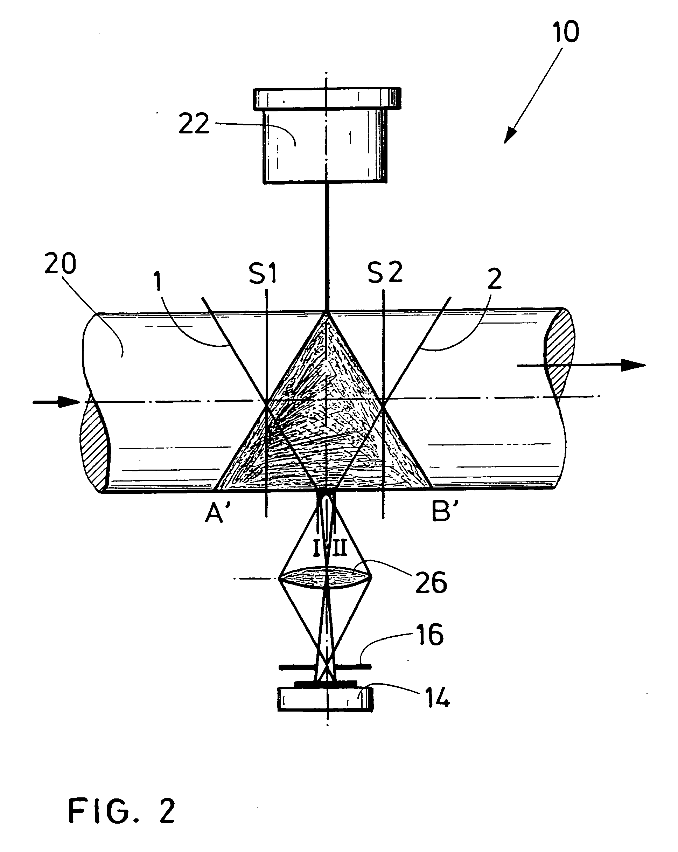

In Fig. 2 ist eine erfindungsgemäße Prüfeinrichtung 10 dargestellt, die eine Laserlichtquelle 22 aufweist. Mittels der Laserlichtquelle 22 wird ein strichförmiger Strahl punktförmig oder fächerartig auf den Filterstrang 20 gerichtet, so dass auf der Eintrittsseite des Lichtstrahls Licht punktförmig und senkrecht in den Filterstrang 20 eingeleitet wird. Von diesem Eintrittspunkt breitet sich das Licht im Filterstrang 20 kegelförmig aus, so dass das Licht auf der Austrittsseite des Filterstrangs 20 im Bereich des Austrittspunkts A'-B' infolge der Streuung verteilt ist.

Außerdem wird auf der Austrittsseite der Einfluss des Öffnungswinkels der Empfangsoptik dadurch minimiert, dass mittels einer Linse 26 eine Abbildungseinrichtung vorhanden ist, die eine Blende 16 enthält, so dass nur eine kurze Strecke I-II der Oberfläche des Filterstrangs 20 auf die fotoempfindliche Schicht des Sensors 14 durchgelassen wird. Dadurch wird auch der Abstand der beiden Ebenen S1, S2 deutlich reduziert.

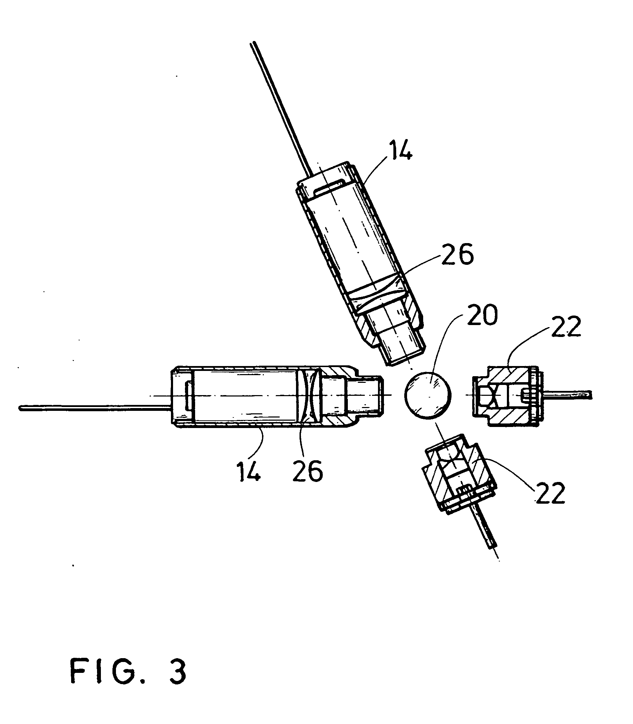

In Fig. 3 ist ein weiteres Ausführungsbeispiel einer Anordnung zur Prüfung eines aus Filtersegmentstücken bestehenden Filterstrangs 20 gezeigt. Hierbei sind zwei Prüfeinrichtungen quer zur Förderrichtung des Filterstrangs 20 vorgesehen, so dass in einer Ebene der Filterstrang 20 von zwei Laserlichtquellen 22 mit Licht beaufschlagt wird. Dadurch werden andere störende Einflüsse, die zu einer Verlängerung des Abstandes der beiden Ebenen S1, S2 führen könnten, zum großen Teil eliminiert.

### Bezugszeichenliste

- 1: Linie
- 2: Linie
- 10: Prüfeinrichtung
- 12: Lichtquelle
- 14: Sensor
- 16: Blende
- 20: Filterstrang
- 22: Laserlichtquelle
- 26: Linse
- A, A', A": Punkt
- B, B', B": Punkt
- I - II: Zone

## Patentansprüche

1. Messeinrichtung zum Prüfen eines längsaxial geförderten stabförmigen Artikels (20) der Tabak verarbeitenden Industrie, insbesondere Filterstrang, vorzugsweise Multisegmentfilterstrang, umfassend eine Lichtquelle (12, 22) zur Durchleuchtung des Artikels (20) und einen im Durchlichtverfahren angeordneten Sensor (14) zur teilweisen Erfassung der im Artikel (20) durch die Lichtquelle (12, 22) hervorgerufenen Helligkeit, **dadurch gekennzeichnet,**
**dass** die Lichtquelle (12, 22) als Laserlichtquelle (22) ausgebildet ist, mittels derer ein Lichtstrahl senkrecht zur Förderrichtung des Artikels (20) fächerartig oder punktförmig auf einer Eintrittsseite in den Artikel (20) eingeleitet wird,
**dass** auf einer Austrittsseite wenigstens eine optische Linse (26) vorgesehen ist, die derart ausgebildet ist, dass ein kleinerer Bereich eines durch die Laserlichtquelle (22) im Artikel (20) erzeugten Helligkeitsbereichs auf der Austrittsseite des Artikels (20) erfasst wird,
und **dass** im Strahlengang zwischen der optischen Linse (26) und dem Sensor (14) eine Blende (16) vorgesehen ist.

2. Einrichtung zum Prüfen eines längsaxial geförderten stabförmigen Artikels (20) der Tabak verarbeitenden Industrie, insbesondere Filterstrang, vorzugsweise Multisegmentfilterstrang, mit einer Messeinrichtung nach Anspruch 1.

3. Einrichtung nach Anspruch 2, **dadurch gekennzeichnet, dass** wenigstens zwei Messeinrichtungen nach Anspruch 1 vorgesehen sind.

4. Einrichtung nach Anspruch 3, **dadurch gekennzeichnet, dass** mehrere Messeinrichtungen nach Anspruch 1 quer zur Längsachse des längsaxial geförderten Artikels (20), vorzugsweise in einer Ebene, angeordnet sind.

5. Maschine der Tabak verarbeitenden Industrie, insbesondere Multisegmentfilterherstellungsmaschine, mit einer Messeinrichtung nach Anspruch 1 oder einer Einrichtung nach einem der Ansprüche 2 bis 4.

6. Verfahren zum Prüfen eines längsaxial geförderten stabförmigen Artikels (20) der Tabak verarbeitenden Industrie, insbesondere Filterstrang, vorzugsweise Multisegmentfilterstrang, wobei der Artikel (20) mittels einer Lichtquelle (12, 22) durchleuchtet wird und die durch die Lichtquelle (12, 22) hervorgerufene Helligkeit im durchleuchteten Artikel (20) mittels eines im Durchlichtverfahren angeordneten Sensors (14) teilweise erfasst wird, **dadurch gekennzeichnet,**
**dass** die Lichtquelle (12, 22) als Laserlichtquelle (22) ausgebildet ist, mittels derer ein Lichtstrahl senkrecht zur Förderrichtung des Artikels (20) fächerartig oder punktförmig auf einer Eintrittsseite in den Artikel (20) eingeleitet wird,
**dass** auf einer Austrittsseite wenigstens eine optische Linse (26) vorgesehen ist, die derart ausgebildet ist, dass ein kleinerer Bereich eines durch die Laserlichtquelle (22) im Artikel (20) erzeugten Helligkeitsbereichs auf der Austrittsseite des Artikels (20) erfasst wird,
und **dass** im Strahlengang zwischen der optischen Linse (26) und dem Sensor (14) eine Blende (16) vorgesehen ist.

7. Verfahren nach Anspruch 6, **dadurch gekennzeichnet, dass** der Artikel (20) mittels wenigstens zweier Laserlichtquellen (12, 22) durchleuchtet wird.

## Claims

1. Measuring apparatus for checking a bar-shaped article (20) belonging to the tobacco-processing industry, in particular a filter rod, preferably a multi-segment filter rod, which is conveyed in a longitudinally axial manner, said measuring apparatus comprising a light source (12, 22) for transilluminating the article (20) and a sensor (14), which is disposed in the transillumination process, for the partial detection of the brightness produced in said article (20) by the light source (12, 22), **characterised in that**
the light source (12, 22) is constructed as a laser light source (22) by means of which a light beam is directed into the article (20), perpendicularly to the direction of conveyance of said article (20), in a fan-like or punctiform manner on an entry side,
that there is provided, on an exit side, at least one optical lens (26) which is constructed in such a way that a smaller area of an area of brightness generated in the article (20) by the laser light source (22) is detected on the exit side of said article (20),
and that a diaphragm (16) is provided in the beam path between the optical lens (26) and the sensor (14).

2. Apparatus for checking a bar-shaped article (20) belonging to the tobacco-processing industry, in particular a filter rod, preferably a multi-segment filter rod, said apparatus having a measuring apparatus according to claim 1.

3. Apparatus according to claim 2, **characterised in that** at least two measuring apparatuses according to claim 1 are provided.

4. Apparatus according to claim 3, **characterised in that** a number of measuring apparatuses according to claim 1 are disposed, preferably in one plane, transversely to the longitudinal axis of the article (20) which is conveyed in a longitudinally axial manner.

5. Machine belonging to the tobacco-processing industry, in particular a multi-segment filter manufacturing machine, having a measuring apparatus according to claim 1 or an apparatus according to one of claims 2 to 4.

6. Process for checking a bar-shaped article (20) belonging to the tobacco-processing industry, in particular a filter rod, preferably a multi-segment filter rod, which is conveyed in a longitudinally axial manner, wherein said article (20) is transilluminated by means of a light source (12, 22) and the brightness produced in the transilluminated article (20) by said light source (12, 22) is partially detected by means of a sensor (14) disposed in the transilluminating process, **characterised in that**
the light source (12, 22) is constructed as a laser light source (22) by means of which a light beam is directed into the article (20), perpendicularly to the direction of conveyance of said article (20), in a fan-like or punctiform manner on an entry side,
that there is provided, on an exit side, at least one optical lens (26) which is constructed in such a way that a smaller area of an area of brightness generated in the article (20) by the laser light source (22) is detected on the exit side of said article (20),
and that a diaphragm (16) is provided in the beam path between the optical lens (26) and the sensor (14).

7. Process according to claim 6, **characterised in that** the article (20) is transilluminated by means of at least two laser light sources (12, 22).

## Revendications

1. Dispositif de mesure pour le contrôle d'un article (20), en forme de bâtonnet transporté selon l'axe longitudinal, de l'industrie de transformation du tabac, en particulier d'un tube de filtre, de préférence d'un tube de filtre multisegment, comportant une source lumineuse (12, 22) destinée à examiner par transparence l'article (20) et un détecteur (14) disposé dans le procédé d'examen par transparence pour l'enregistrement partiel de la luminosité générée dans l'article (20) par la source lumineuse (12, 22), **caractérisé**
**en ce que** la source lumineuse (12, 22) est réalisée sous forme de source de lumière laser (22) à l'aide de laquelle un rayon lumineux est envoyé, en auréole ou par point, sur un côté entrée de l'article (20), perpendiculairement au sens de transport de l'article (20),
**en ce qu'**il est prévu, sur un côté sortie, au moins une lentille optique (26) réalisée de telle sorte qu'une partie assez petite d'une zone de luminosité générée dans l'article (20) par la source de lumière laser (22) est enregistrée sur le côté sortie de l'article (20)
et **en ce qu'**il est prévu un écran (16) dans le trajet du faisceau lumineux entre la lentille optique (26) et le détecteur (14).

2. Dispositif de contrôle d'un article (20), en forme de bâtonnet transporté selon l'axe longitudinal, de l'industrie de transformation du tabac, en particulier d'un tube de filtre, de préférence d'un tube de filtre multisegment, comportant un dispositif de mesure selon la revendication 1.

3. Dispositif selon la revendication 2, **caractérisé en ce qu'**il est prévu au moins deux dispositifs de mesure selon la revendication 1.

4. Dispositif selon la revendication 3, **caractérisé en ce que** plusieurs dispositifs de mesure selon la revendication 1 sont disposés transversalement par rapport à l'axe longitudinal de l'article (20) transporté selon l'axe longitudinal, de préférence dans un plan.

5. Machine de l'industrie de transformation du tabac, en particulier machine de fabrication de filtres multisegment, comportant un dispositif de mesure selon la revendication 1 ou un dispositif selon l'une des revendications 2 à 4.

6. Procédé de contrôle d'un article (20), en forme de bâtonnet transporté selon l'axe longitudinal, de l'industrie de transformation du tabac, en particulier d'un tube de filtre, de préférence d'un tube de filtre multisegment, l'article (20) étant examiné par transparence à l'aide d'une source lumineuse (12, 22) et la luminosité générée par la source lumineuse (12, 22) dans l'article (20) examiné par transparence étant enregistrée à l'aide d'un détecteur (14) disposé dans le procédé d'examen par transparence, **caractérisé**
**en ce que** la source lumineuse (12, 22) est réalisée sous forme de source de lumière laser (22) à l'aide de laquelle un rayon lumineux est envoyé, en auréole ou par point, sur un côté entrée de l'article (20), perpendiculairement au sens de transport de l'article (20),
**en ce qu'**il est prévu, sur un côté sortie, au moins une lentille optique (26) réalisée de telle sorte qu'une partie assez petite d'une zone de luminosité générée dans l'article (20) par la source de lumière laser (22) est enregistrée sur le côté sortie de l'article (20)
et **en ce qu'**il est prévu un écran (16) dans le trajet du faisceau lumineux entre la lentille optique (26) et le détecteur (14).

7. Procédé selon la revendication 6, **caractérisé en ce que** l'article (20) est examiné par transparence à l'aide d'au moins deux sources de lumière laser (12, 22).
